# DEMANDE DE BREVET EUROPEEN

(11) **EP 4 654 216 A1**
(43) Date de publication de la demande: **26.11.2025**
(21) Numéro de dépôt: 24315241.0
(22) Date de dépôt: 22.05.2024
(51) Int. Cl.: G21F 9/02

(54) **PROCÉDÉ ET SYSTÈME POUR TRAITER UN GAZ EFFLUENT D'UN RÉACTEUR NUCLÉAIRE À SELS FONDUS**

(71) Demandeur: Naarea, 92000 Nanterre (FR)
(72) Inventeur: CHATELAIN, Aurélien, 92000 Nanterre (FR); CAGNIANT, Antoine, 92000 Nanterre (FR); PEROT, Florian, 92000 Nanterre (FR); CHAVEAU, Romain, 92000 Nanterre (FR)
(74) Mandataire: Yes My Patent

(57) **Abrégé**

Système et procédé pour purifier des gaz à traiter issus d'un coeur de réacteur nucléaire (1) utilisant comme combustible un fluide primaire liquide, le dispositif comprenant une première cuve de refroidissement (2), une deuxième cuve de piégeage (3), pour piéger, dans des sels fondus de piégeage, des composés chimiques, la cuve de piégeage délimitant un volume intérieur (V3), et recevant les gaz à traiter refroidis (F3) en provenance de la première cuve, la cuve de piégeage comprenant un diffuseur (5) séparant le volume intérieur entre un compartiment inférieur (3A) et un compartiment supérieur contenant les sels fondus, avec un système de recirculation (4) des gaz, les gaz recirculés étant introduits dans le compartiment inférieur, et diffusés au travers du diffuseur dans les sels fondus de piégeage, les gaz à traiter refroidis (F3) en provenance de la première cuve étant introduits dans le compartiment supérieur au dessus du diffuseur.

## Description

La présente invention se rapporte à un procédé et un système pour traiter un gaz chargé d'effluents gazeux issus d'un réacteur nucléaire à sels fondus.

On s'intéresse ici à un réacteur à fission nucléaire, dont le coeur utilise comme combustible un sel combustible à pression sensiblement atmosphérique. On parle dans le jargon d'un réacteur nucléaire de 4e génération à neutrons rapides à sels fondus.

Le terme « sel combustible » désigne ici une composition comprenant au moins un sel porteur, par exemple un fluorure tel que Li ou NaF ou un chlorure, lequel sel porteur est à l'état solide (cristaux) à température ambiante mais devient liquide au-delà d'une certaine température qui va permettre le démarrage du réacteur, et un combustible à base de noyaux lourds. Lesdits noyaux lourds comprennent des isotopes fissibles ou fissiles, par exemple de l'Uranium 233 et/ou de l'uranium 235 et/ou du Plutonium 239 ou un mélange de ceux-ci.

Dans le type de réacteur à sels fondus, le coeur produit des composés volatils qui doivent être évacués du coeur. La présente invention se focalise sur le traitement des gaz qui sont les effluents du coeur du réacteur.

Ces gaz effluents du coeur du réacteur sont chargés de composants et contaminants dont certains sont radioactifs.

Il est souhaitable de mettre en sécurité les contaminants, dont les radioactifs, contenus dans les gaz effluents du coeur.

En pratique, il est connu d'installer un circuit de gaz, basé sur la circulation d'un gaz porteur, tel que l'hélium, pour convoyer les contaminants gazeux effluents du coeur vers un circuit de lavage et purification.

Dans un tel circuit de lavage et purification, on utilise un procédé de piégeage à base de sels fondus de piégeage. Le procédé de piégeage/capture est un piège basé sur la condensation pour les gouttelettes en suspension, et sur le principe d'absorption chimique des vapeurs et des composés volatils pour les autres contaminants. Les sels fondus absorbent de manière irréversible les composés volatils et autres contaminants, on parle alors de piège « à charge perdue ».

Dans l'art connu, on utilise comme sels fondus des hydroxydes de sodium ou de potassium, voire des carbonates ternaires qui seront discutés plus-loin.

Dans des solutions connues, on pulvérise grâce à des douchettes depuis le haut des gouttelettes de ces sels fondus dans une enceinte de lavage où le gaz à purifier réside. La pulvérisation est réalisée en continu et peut faire appel à un circuit de recirculation des sels fondus. Au fur et à mesure de l'avancement du process, les sels fondus se chargent de composés chimiques objet du piégeage. De temps en temps, dans ces solutions connues, les sels fondus sont renouvelés.

Ces solutions connues impliquent une consommation importante de sels fondus de piégeage.

De plus, généralement, les enceintes de lavage de gaz de ces solutions connues présentent une hauteur conséquente.

C'est dans ce contexte que les inventeurs en sont venus à proposer la solution particulièrement avantageuse exposée ci après.

A cet effet, il est proposé un dispositif pour purifier des gaz à traiter issus d'un coeur de réacteur nucléaire utilisant comme combustible un fluide primaire liquide de type à sels fondus, le dispositif comprenant :
- une cuve de refroidissement, pour refroidir les gaz à traiter, et recevant les gaz à traiter en provenance du coeur de réacteur,
- une cuve de piégeage, configurée pour piéger, dans des sels fondus de piégeage, des composés chimiques à capturer, la cuve de piégeage délimitant un volume intérieur, la cuve de piégeage recevant les gaz à traiter refroidis en provenance de la cuve de refroidissement,

la cuve de piégeage comprenant un diffuseur séparant le volume intérieur en deux compartiments, avec un compartiment inférieur ne contenant pas de sel fondu en quantité substantielle, et un compartiment supérieur principal contenant les sels fondus,
la cuve de piégeage étant équipée d'un système de recirculation des gaz en cours de purification, les gaz recirculés étant introduits dans le compartiment inférieur, et diffusés au travers du diffuseur dans les sels fondus de piégeage, les gaz à traiter refroidis en provenance de la cuve de refroidissement étant introduits dans le compartiment supérieur principal au dessus du diffuseur.

La cuve de refroidissement, formant une première cuve, condense les éléments en suspension les plus faciles à condenser et capture une partie des poussières solides.

Avantageusement, dans la deuxième cuve, de piégeage, les gaz recirculés, introduits sous le diffuseur, provoquent un phénomène de bullage et entretiennent l'agitation, ce qui permet de limiter l'accumulation des précipités sur le diffuseur, et d'augmenter l'homogénéité du mélange liquide/bulles.

Le diffuseur laisse passer les gaz mais ne laisse pas passer les sels fondus, et le compartiment inférieur sert de plénum pour bien répartir les gaz recirculés sur toute la surface du diffuseur et ainsi le phénomène de bullage se produit sensiblement dans tout le volume des sels fondus, maximisant ainsi la capture des composés chimiques à capturer.

Grâce à ces dispositions, les sels fondus de piégeage peuvent accumuler une quantité importante de contaminants, et par conséquent la consommation en sels fondus de piégeage est moindre que dans l'art connu.

De plus, la recirculation du gaz forme une solution beaucoup plus compacte dans le sens vertical que la solution de pulvérisation des sels fondus. On peut arriver à une compacité verticale très intéressante.

Dans le présent document, les termes « *inférieur* »*,* « dessous », « *supérieur* » et « dessus » sont à interpréter par rapport à la verticale locale définie par la gravité terrestre.

Il faut d'ores et déjà remarquer que le premier passage des gaz à traiter ne traverse pas le diffuseur car l'injection est réalisée au.dessus du diffuseur.

Selon une réalisation, les gaz à traiter comportent une base d'hélium.

Avantageusement, l'hélium est un gaz inerte vis-à-vis des autres composants chimiques qui sont entraînés dans le flux de gaz. L'hélium est un gaz porteur neutre qui n'interagit pas avec les autres espèces chimiques.

Selon une réalisation alternative, on pourrait utiliser un autre gaz porteur tel que l'argon, le krypton, le diazote ou un autre gaz inerte.

Selon une réalisation, le diffuseur comprend des passages traversants, la section des passages traversants étant comprise entre 0,1 micromètre² et 100 micromètre².

Moyennant quoi, le flux de gaz recirculé peut se faufiler dans les passages traversants et remonter via lesdits passages jusque dans le compartiment supérieur principal. À l'inverse, les sels fondus dans le compartiment supérieur principal ne peuvent pas passer dans les passages traversants et descendre vers le compartiment inférieur. Le compartiment inférieur reste donc dépourvu des sels fondus.

Selon une option, le diffuseur est obtenu par frittage ou équivalent, à partir d'un matériau métallique ou céramique. Il s'agit d'une solution de fabrication bien maîtrisée et précise.

D'une manière générale, toute solution permettant d'obtenir un matériau microporeux présentant des passages de section homogène et dans un intervalle souhaité peut convenir pour fabriquer le diffuseur de gaz.

Selon une réalisation, le diffuseur se présente comme un disque plat, de diamètre **D5** et d'épaisseur **E5.**

Selon une réalisation particulière, les sels de piégeage sont à base de sels hydroxyde, e.g. **NaOH** et/ou **KOH.** On peut choisir un mélange de sels hydroxydes NaOH et KOH en quantité sensiblement égale.

Par exemple les sels de piégeage hydroxyde peuvent contenir en composition molaire 51% de NaOH et 49% de KOH, ce mélange ayant une température de fusion de 172°C.

La gamme de température impliquée pour les sels de piégeage hydroxyde est autour de 200°C à 250°C. On travaille généralement avec une marge de quelques dizaines de degrés au dessus par rapport à la température de fusion, pour éviter tout risque de cristallisation indésirée.

Selon une autre réalisation particulière, les sels de piégeage sont à base de sels carbonate, e.g. **Li2CO3** et/ou **Na2CO3** et/ou **K2CO3.**

La gamme de température impliquée pour les sels de piégeage carbonate est autour de 500°C.

Selon une réalisation, il est prévu un système de maintien en température de la cuve de piégeage. Ce système permet d'une part d'éviter la cristallisation des sels et d'autre part d'éviter une surchauffe de la cuve de piégeage.

Le système de maintien en température en question peut comprendre un système de chauffage, notamment pout faire fondre les sels s'ils sont introduits sous forme de cristaux et peut comprendre un système de refroidissement pour évacuer les calories produites par l'énergie résiduelle contenue dans le flux gazeux à traiter.

Selon une réalisation, on peut utiliser un seul circuit fluide auxiliaire avec un couplage thermique par échangeur pour réaliser à la fois les fonctions de refroidissement et de chauffage.

Selon une réalisation, la cuve de piégeage est généralement de révolution autour d'un axe et présente un diamètre intérieur **D3** pris à mi-hauteur, le diffuseur étant formé comme un disque de diamètre extérieur **D5,** et D5 étant compris entre 85 % et 96 % de D3.

La région couverte par les passages traversants du diffuseur est donc très importante par rapport à la surface occupée par la section horizontale du compartiment supérieur principal, et pour autant il est possible de faire passer le diffuseur depuis le bas vers le haut par une opération de levage pour l'extraire de la cuve comme il sera vu plus loin.

Selon une réalisation, la cuve de piégeage comprend un corps de cuve et un couvercle, le corps de cuve présentant une embouchure ouverte vers le haut avec un diamètre d'embouchure **D1** supérieur au diamètre extérieur **D5** du diffuseur.

Le retrait du couvercle permet d'effectuer toutes les opérations nécessaires de maintenance, notamment les opérations prévues à l'occasion d'une séquence d'arrêt et de rechargement de combustible du réacteur.

Selon une réalisation, le diffuseur comprend un élément d'accrochage central, et il est prévu un système de levage vertical pour lever le diffuseur et le retirer de la cuve.

On peut ainsi, en fin de cycle, vidanger la cuve de piégeage et retirer le diffuseur par l'embouchure de la cuve afin de le remplacer par un nouveau en vue de démarrer un nouveau cycle de production.

Selon une réalisation, le compartiment supérieur principal contient les sels fondus avec un taux de remplissage compris entre 60% et 85% du volume intérieur (V3).

Cette caractéristique représente un optimum de taux de capture des composés volatiles que l'on souhaite piéger. On note qu'il reste un ciel gazeux substantiel au-dessus de la phase liquide, l'aspiration des gaz par le système de recirculation étant réalisé dans ce ciel gazeux sans aspirer de liquide.

Selon une réalisation, le compartiment inférieur (3A) occupe moins de 5% du volume intérieur (V3).

Selon une réalisation, les gaz à traiter refroidis en provenance de la cuve de refroidissement sont introduits dans le compartiment supérieur principal, au dessus du diffuseur via une pluralité d'orifices formés sur une ou plusieurs cannes de bullage.

Selon une réalisation, chaque orifice de bullage est dirigé radialement vers l'axe de cuve ou vers le bas, ou de façon intermédiaire en oblique vers le bas et vers l'intérieur.

Selon une réalisation, les orifices étant régulièrement répartis autour du corps de cuve.

Ainsi, le premier passage du gaz à traiter ne passe pas au travers du diffuseur, et par conséquent le risque de boucher les passages traversants du diffuseur par des poussières ou des composants qui pourraient occasionner un bouchage est éliminé. Le premier passage dans le bain de sels fondus permet de piéger les éléments les plus grossiers en une passe initiale. Les passes ultérieures procurées par le système de recirculation permettent d'augmenter le taux de capture des composés les plus volatiles.

La présente invention vise aussi un procédé pour purifier des gaz contaminés issus d'un coeur de réacteur nucléaire utilisant comme combustible un fluide primaire liquide de type sels fondus, le procédé comprenant :
- fournir une cuve de piégeage, configurée pour piéger, dans des sels fondus de piégeage, des composés chimiques à capturer présents dans le gaz à purifier, la cuve de piégeage délimitant un volume intérieur, la cuve de piégeage comprenant un diffuseur séparant le volume intérieur en deux compartiments, avec un compartiment inférieur ne contenant pas de sel fondu en quantité substantielle, et un compartiment supérieur principal contenant les sels fondus, la cuve de piégeage étant équipée d'un système de recirculation des gaz en cours de purification,
- introduire les gaz à traiter refroidis dans le compartiment supérieur principal au dessus du diffuseur,
- introduire les gaz recirculés par le système de recirculation dans le compartiment inférieur, et les diffuser au travers du diffuseur dans les sels fondus de piégeage.

Comme déjà indiqué plus haut, les gaz recirculés introduits sous le diffuseur provoquent un phénomène de bullage et entretiennent l'agitation, ce qui permet de limiter l'accumulation des précipités sur le diffuseur, et d'augmenter l'homogénéité du mélange liquide/bulles.

En outre le premier passage des gaz ne vient pas polluer le diffuseur et le risque de boucher les passages du diffuseur à l'occasion de la passe initiale est éliminé.

Selon une réalisation, on prélève une portion du flux de recirculation pour former un flux de sortie (F6) dérivé du système de recirculation

Ce flux de sortie compense en moyenne la génération de gaz issue du coeur du réacteur, de sorte que la pression dans le circuit de gaz reste substantiellement constante au cours du temps. Il faut noter que ce flux de sortie subit ensuite des traitements complémentaires afin de compléter la purification et de pouvoir réutiliser le gaz porteur (l'hélium ou un autre gaz porteur) pour l'injecter à nouveau au contact du circuit primaire. Le circuit du gaz porteur forme ainsi une boucle fermée.

Selon une réalisation, la fraction représentant le flux de sortie est comprise entre 5% et 15% du flux de recirculation. Selon une réalisation, la portion du flux de sortie est de préférence voisine de 10%.

Moyennant quoi, le gaz en cours de traitement passe une dizaine de fois dans le bain de sels fondus. Ceci permet d'augmenter la purification et de diminuer le taux de composants volatiles qui ne sont pas capturés par le procédé proposé ici.

La présente invention vise aussi un réacteur nucléaire utilisant comme combustible un fluide primaire liquide de type sels fondus et comprenant au moins un dispositif tel que décrit ci-dessus et/ou mettant en œuvre un procédé tel que décrit ci-dessus.

L'invention sera davantage détaillée par la description de modes de réalisation non limitatifs, et sur la base des figures annexées illustrant des variantes de l'invention.
La figure 1 montre un schéma de principe général d'un réacteur nucléaire de type à sels fondus dans lequel la présente invention peut être mise en oeuvre.
La figure 2 illustre schématiquement une vue de coupe verticale de la cuve de refroidissement.
La figure 3 illustre schématiquement une vue de coupe verticale de la cuve de piégeage.
La figure 4 illustre schématiquement une vue de coupe horizontale de la cuve de piégeage.
La figure 5 illustre schématiquement une opération de vidange de la cuve de piégeage.
La figure 6 illustre schématiquement une opération de remplacement du diffuseur de la cuve de piégeage.
La figure 7 illustre schématiquement un exemple de procédé promu par la présente invention.

Sur les différentes figures, les mêmes références désignent des éléments identiques ou similaires. Pour des raisons de clarté de l'exposé, certains éléments ne sont pas nécessairement représentés à l'échelle.

En référence aux figures, on décrit maintenant un réacteur de fission nucléaire de type à sels fondus avec les équipements auxiliaires de purification d'un gaz porteur chargé des flux en gazeux produits par le circuit primaire du réacteur.

On s'intéresse ici à une installation de production d'électricité ou de production de chaleur industrielle à base de réacteur nucléaire de dimension compact. Cette installation repérée **100** peut être, selon une option, une entité transportable. Par exemple, la puissance cible installée peut être comprise entre 50 mégawatts et 100 mégawatts.

Le coeur du réacteur à combustible de sels fondus est noté **1.** Il est enfermé hermétiquement dans une cuve **10** doublée d'une enceinte de confinement.

Le coeur du réacteur **1** n'est pas particulièrement pressurisé, il est opéré sensiblement à la pression atmosphérique locale.

Les noyaux lourds formant le combustible fissile se trouvent mélangés aux sels fondus. Il est prévu une cuve de vidange passive en dessous pour interrompre le processus de réaction en chaîne en cas d'incident. En outre il peut être prévu des barres de contrôle.

Le coeur du réacteur est considéré connu en soi, donc non décrit plus en détails ici.

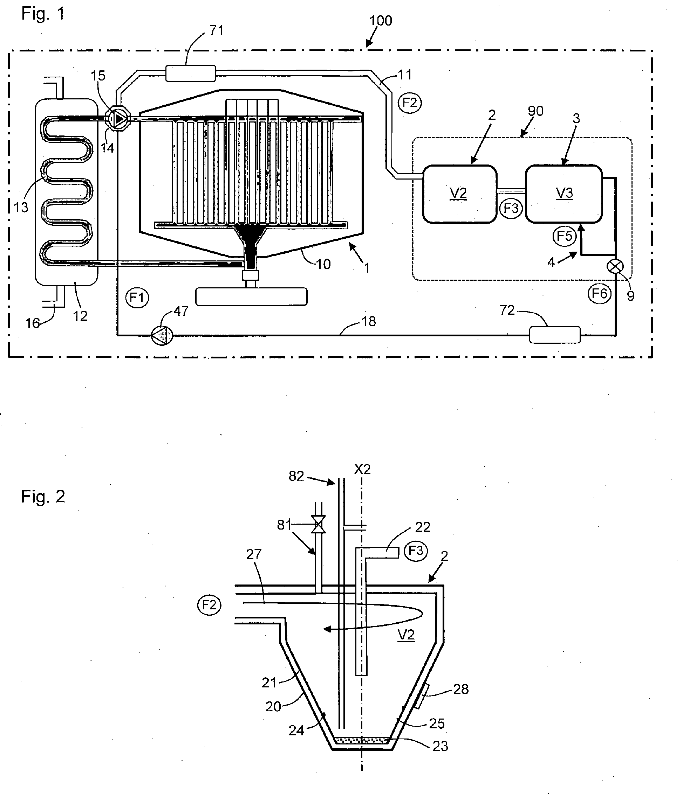

Il est prévu un échangeur thermique **12** entre un serpentin du circuit primaire **13** et un circuit secondaire **16** également à base de sels fondus. L'aval du circuit de puissance, à savoir par exemple les entités d'électro-génération et les circuits condenseurs généraux n'ont pas été représentés sur la figure 1.

Dans d'autres configurations de coeur de réacteur, non représentées à la figure, le fluide du circuit secondaire peut pénétrer plus intimement dans le coeur du réacteur et prélever les calories directement au contact de la pluralité des canaux du flux de primaire.

Le circuit primaire est équipé d'au moins une pompe de circulation primaire repérée **15.**

C'est au niveau de cette pompe de circulation **15** qu'est injecté un flux de gaz porteur, qui dans l'exemple illustré est de l'hélium. Ce flux d'injection de gaz est noté **F1.**

L'injection du gaz porteur est réalisée grâce à l'effet d'une pompe de circulation **47,** qui injecte le gaz porteur avec une pression voisine de 3 bar (max 6 bar).

Il est prévu à l'endroit de la pompe de circulation primaire **15** un agencement qui permet l'injection du gaz porteur à cet endroit. Il peut s'agir d'éléments de conduite de gaz **14** avec les moyens d'étanchéité associés autour de la pompe de circulation primaire **15.**

En sortie du dispositif de purification des gaz noté **90,** il est prévu un flux de sortie de gaz porteur purifié noté **F6** qui poursuit sa progression dans un circuit de purification complémentaire **72,** non décrit en détail ici.

Le circuit du gaz porteur forme ainsi une boucle. La boucle de retour de gaz porteur **18** alimente la pompe de circulation **47.**

Le circuit du gaz porteur arrivant dans le dispositif de purification **90** est noté **11.** Il peut passer optionnellement dans une ligne à retard repérée **71.** À cet endroit, le circuit de gaz porteur est sensiblement à la pression atmosphérique où légèrement inférieure.

Sur la figure 1, le dispositif de purification des gaz **90** est représenté de manière schématique à droite du coeur du réacteur.

Comme il sera vu ci après, le dispositif de purification des gaz 90 est prévu pour purifier (on dit aussi 'laver' ou 'traiter') le gaz porteur chargé des contaminants prélevés dans le circuit primaire du réacteur.

Le dispositif de purification des gaz comprend au moins une première cuve, dite cuve de refroidissement **2,** pour refroidir les gaz à traiter.

La première cuve reçoit les gaz à traiter en provenance du coeur de réacteur, ce flux est noté **F2,** et délivre en sortie des gaz à traiter refroidis (flux noté **F3)** vers une deuxième cuve.

Le dispositif de purification des gaz comprend au moins une deuxième cuve, dite cuve de piégeage **3.**

La cuve de piégeage reçoit les gaz à traiter refroidis en provenance de la première cuve dite de refroidissement.

Optionnellement, il est prévu une enceinte enfermant la première cuve **2** et la deuxième cuve **3.**

La cuve de piégeage **3** est équipée d'un système de recirculation **4** des gaz en cours de purification.

La sortie **41** de la cuve de piégeage forme un flux **F4** qui se divise en deux parties, d'une part un flux recirculé noté **F5** et d'autre part un flux de sortie noté **F6.**

### Cuve de refroidissement

On a illustré à la figure 2 la première cuve, dite cuve de refroidissement 2. La cuve de refroidissement 2 délimite un volume intérieur noté **V2.**

La cuve de refroidissement présente une forme générale de révolution autour de l'axe noté **X2.**

La cuve de refroidissement **2** est généralement ou partiellement conique. Il est prévu une entrée tangentielle en haut et sortie depuis le bas par un puisard sur l'axe. Le gaz avance généralement selon un parcours cyclonique **27.** Le parcours permet une capture des condensats **23** dans une phase liquide en base de cuve et une capture des poussières agrégées sur les parois aux endroits notés **24, 25.**

La cuve de refroidissement est du type à double paroi. La cuve de refroidissement comprend une paroi externe **20** et une paroi interne **21.**

Un système de rinçage de la cuve de refroidissement, avec le même sel de piégeage que celui de la deuxième cuve, par siphonage. On procède un remplissage au moins partiel de la cuve avec un sel de rinçage fondu via une tuyauterie de rinçage **81.** On procède ensuite à un siphonnage du contenu liquide de la cuve via une ligne de siphonnage **82.**

La cuve de refroidissement **2** est équipée d'un système de maintien en température avec des éléments chauffants **28** adjacents à la cuve, destinée à maintenir-la température des sel fondus pour le rinçage quelques dizaines de degrés au-dessus de leur température de précipitation.

Selon une solution alternative, on peut vider le contenu de la cuve de refroidissement par le bas, grâce à une trappe de vidange, normalement fermée hermétiquement et possiblement à double paroi.

La sortie de la cuve de refroidissement est notée **22.**

On remarque que, concernant la pression de gaz, la cuve de refroidissement **2** n'occasionne pas de perte de charge notable, pas plus que la ligne à retard **71** précédemment mentionnée.

Les gaz à traiter (flux **F2)** arrivent dans la cuve de refroidissement avec une température comprise entre 600°C et 700°C.

### Cuve de piégeage

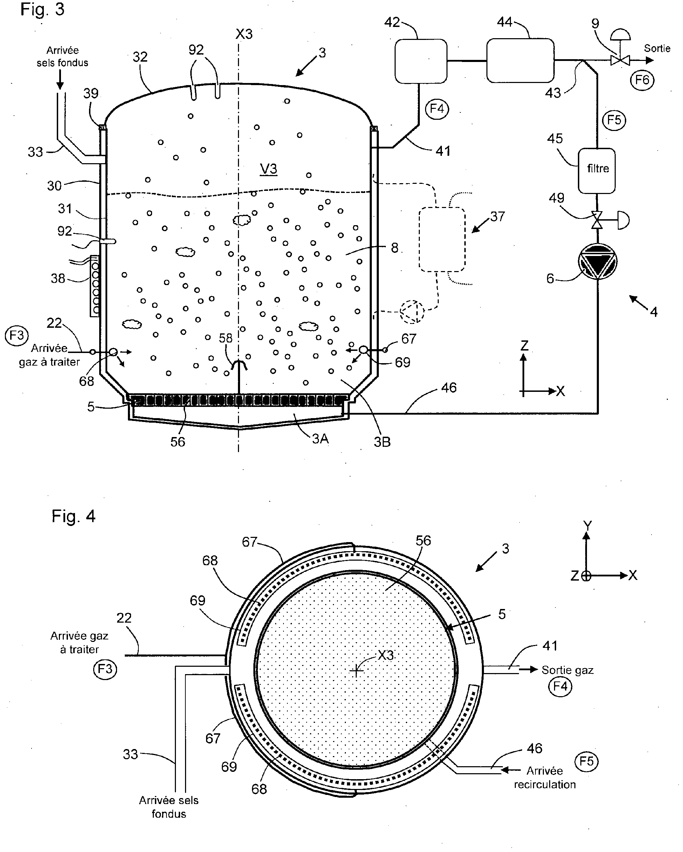

On a illustré à la figure 3 la deuxième cuve, dite cuve de piégeage **3** qui reçoit les gaz à traiter refroidis depuis la cuve de refroidissement par la conduite **22.**

La cuve de piégeage présente une forme générale de révolution autour de l'axe noté **X3.** La cuve de piégeage **3** délimite un volume intérieur noté **V3.**

La cuve de piégeage **3** comprend un corps de cuve **31** et couvercle amovible **32.** Le couvercle **32** est monté de manière amovible sur le corps de cuve. En fonctionnement normal, il est prévu qu'un système d'étanchéité **39** assure l'étanchéité entre le couvercle et le corps de cuve. Lorsque la production d'énergie est arrêtée, le couvercle **32** peut être soulevé ou pivoté pour libérer le passage afin que des bras robotisés puissent venir intervenir à l'intérieur du corps de cuve.

La cuve de piégeage est du type à double paroi. Auquel cas, la cuve de piégeage comprend une paroi externe **30** et une paroi interne **31.**

Selon un exemple de réalisation, la cuve de piégeage est fabriquée en alliage base nickel.

La cuve de piégeage **3** présente un diamètre intérieur **D3** pris à mi-hauteur

Selon un exemple particulièrement pertinent, **D3** < 1m.

La cuve de piégeage 3 présente une hauteur (hors couvercle) notée **H3.**

En général **H3** < 2 m, de façon particulière on peut choisir **H3** < 1,5 m.

Selon un exemple de réalisation, la géométrie de la cuve de piégeage est telle que son volume intérieur **V3** est inférieur à 200 litres.

Dans un exemple particulier, le diamètre **D3** est entre 0,4 m et 0,6 m et la hauteur est entre 0,8 m et 1,2 m.

La cuve de piégeage 3 contient des sels fondus de piégeage repérés **8,** dont la composition sera discutée plus loin.

On note que le taux de remplissage de sels se situe entre 60% et 85% du volume total **V3** de la cuve. Au-dessus des sels liquides **8** se trouve un ciel gazeux de volume suffisant pour assurer que la sortie **41** de la cuve de piégeage ne contienne pas de liquide mais seulement du gaz.

L'introduction des gaz à traiter refroidis est faite par deux cannes de bullage **69.** Chaque canne de bullage **69** se présente comme un tuyau creux cintré en forme d'arc, s'étendant sur presque un demi-cercle, dans le volume intérieur de la cuve, contre la paroi interne de la cuve. Les deux cannes de bullage **69** sont positionnées en partie basse de la cuve juste au dessus du diffuseur **5.**

Le tuyau creux comprend des orifices **68** orientés vers l'axe X3 ou vers le bas, ou en oblique et radialement vers l'intérieur de la cuve. Les orifices 68 peuvent laisser passer des petites poussières et ont par conséquent typiquement un diamètre compris entre 1/10 de millimètre et 1 millimètre. Les deux cannes de bullage **69** sont alimentées par un collecteur **67** extérieur, qui arrive sur les cannes de bullage de part et d'autre de la cuve, à des positions diamétralement opposées, comme représenté à la figure 4.

Bien entendu, d'autres configurations et agencements pour l'introduction du gaz par bullage peuvent être considérées.

### Diffuseur et compartiments

La cuve de piégeage comprend un diffuseur **5** qui sépare le volume intérieur **V3** en deux compartiments, respectivement baptisés inférieur et supérieur.

Le compartiment inférieur **3A** ne contient pas de sel fondu enquantité substantielle.

Par ailleurs, la cuve de piégeage comprend un compartiment supérieur principal **3B** contenant les sels fondus de piégeage.

Le diffuseur se présente comme un disque plat, de diamètre extérieur **D5** et d'épaisseur **E5.**

Le diamètre du diffuseur **D5** est compris entre 85 % et 98 % dudit diamètre intérieur **D3,** de préférence compris entre 90 % et 96 % dudit diamètre intérieur **D3.** La zone de diffusion couvre substantiellement tout le volume des sels fondus.

Le volume du compartiment inférieur **3A** représente un pourcentage faible du volume total, par exemple inférieur à 5% du volume total V3, et même de préférence aux environ 3% du volume total V3. On remarque que le fond de cuve est très légèrement conique.

L'épaisseur **E5** peut être comprise entre 3 mm et 10 mm.

Le diffuseur comprend des passages traversants **56.** La section des passages traversants est par exemple comprise entre 0,1 micromètre² et 100 micromètre². Les passages traversants peuvent être formés comme un agencement de pores dans une structure microporeuse.

Les sels fondus sont chargés dans le compartiment supérieur **3B** au moyen d'une conduite d'introduction **33** des sels fondus.

Le diffuseur porte sur un épaulement circulaire **55** formé en partie basse de la cuve.

Le diffuseur 5 peut être fabriqué par frittage à partir d'un matériau métallique (acier base nickel, inox, etc.). Le diffuseur 5 peut être fabriqué à partir d'un matériau céramique (à base de bore, d'alumine ou de zircone par exemple) et réalisé par agglomération de poudres de céramique plutôt que par frittage. Le diffuseur 5 peut également être recouvert d'un dépôt ou revêtement permettant de donner au diffuseur des propriétés d'imperméabilité aux sels fondus (équivalent « hydrophobe ») tout en résistant à la corrosion. Ce revêtement permet de minimiser la taille des passages sans risquer de boucher le diffuseur.

Selon une réalisation de référence, le diffuseur 5 sera en inconel (même matériau que la cuve) avec une taille de pore/passage de l'ordre du micromètre, avec un revêtement rendant le diffuseur imperméable au sel fondu.

### Système de recirculation

La cuve de piégeage **3** est équipée d'un système de recirculation **4** des gaz en cours de purification.

Le système de recirculation 4 comprend une pompe **6** apte à impartir le mouvement de recirculation du gaz souhaité. La pompe de recirculation 6 doit compenser au moins d'une part la pression hydrostatique induite par la hauteur de liquide dans la cuve et d'autre part la perte de charge liée au passage des gaz au travers des passages du diffuseur.

Toutefois la pompe 6 ne doit pas créer de pression trop importante qui serait néfaste à l'arrivée des gaz depuis la cuve de refroidissement **2** par la conduite d'arrivée **22.**

La pression dans le ciel gazeux de la cuve de piégeage peut être comprise entre 500 mbar et 1200 mbar.

Le système de recirculation **4** comprend un pot séparateur **42** qui fait office de condenseur. Le système de recirculation **4** comprend un volume tampon **44.**

Le système de recirculation 4 comprend un filtre **45.**

Il est prévu une vanne de régulation du flux de sortie cette vanne étant notée **9.** En sortie du volume tampon, le circuit **43** forme un Y avec d'une part une branche de recirculation et d'autre part une branche de sortie. La vanne de sortie **9** laisse passer une petite fraction du flux, 10% pour fixer l'ordre de grandeur, le reste du flux partant dans la branche de recirculation.

En outre il est prévu une vanne de régulation **49,** an aval du filtre et en amont de la pompe **6.**

Le pilotage de la vanne de régulation **49** et de la vanne de flux de sortie **9** permet de bien maîtriser le taux de recirculation des gaz par le flux **F5** et le taux de sortie des gaz du circuit par le flux **F6.**

D'une façon générale, la fraction représentant le flux de sortie est comprise entre 5% et 15% du flux de recirculation.

Les gaz recirculés (arrivant par la conduite **46)** sont introduits dans le compartiment inférieur **3A,** pour être diffusés au travers du diffuseur **5** dans les sels fondus de piégeage.

Le flux de gaz recirculé **F5** se faufile dans les passages traversants **56** et remonte via les passages jusque dans le compartiment supérieur principal **3B.** À l'inverse, les sels fondus **8** dans le compartiment supérieur **3B** ne peuvent pas passer dans les passages traversants **56** et descendre vers le compartiment inférieur **3A.**

La cuve de piégeage **3** est équipée d'un système de maintien en température. Il est prévu un système de couplage thermique à un autre fluide via échangeur **37.** Ce système de couplage thermique peut par exemple impliquer la circulation d'un fluide dans l'intervalle disponible entre la cuve interne **31** et la cuve externe **30.** Ce système de couplage thermique est configuré pour refroidir la cuve de piégeage et son contenu ; ce système peut être aussi utilisé dans certaines circonstances pour réchauffer la cuve de piégeage et son contenu.

Il peut aussi être prévu un système de réchauffage spécifique à base de résistances ou au moyen de chauffage par induction **38.**

La cuve de piégeage **3** est équipée d'un ou plusieurs capteurs de température **92** et de capteurs de pression. D'autres capteurs peuvent être implantés, par exemple des capteurs de composition chimique, etc.

Les capteurs sont disposés de façon à ne pas gêner les opérations de levée du diffuseur **5,** soit sur les côtés de la cuve, soit plongeants à partir du couvercle 32 et donc embarqués avec le couvercle 32 lorsque l'on ouvre ce dernier.

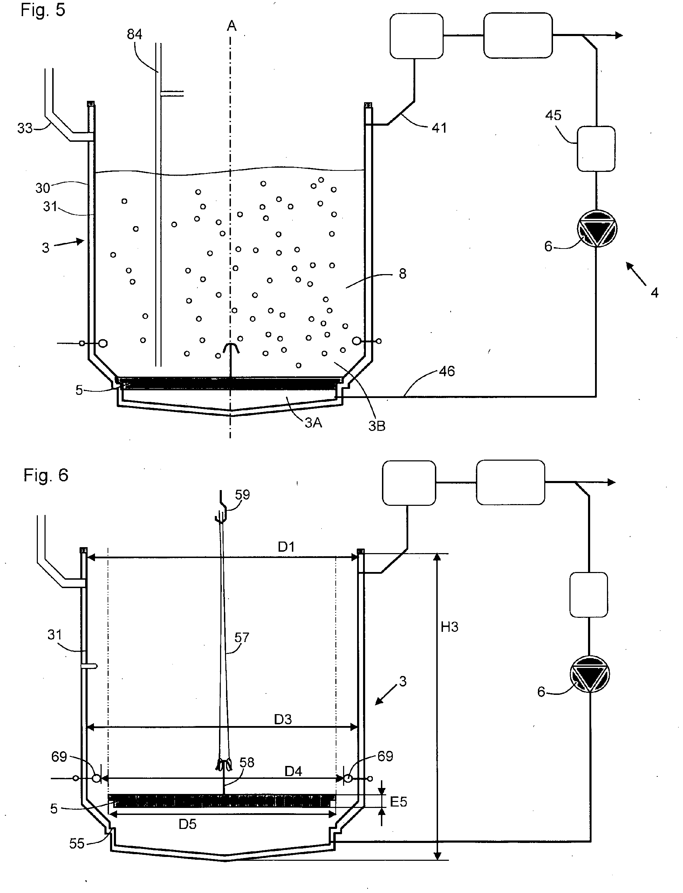

Sur la figure 5, on a représenté une opération de vidange par siphonnage des sels fondus chargés des composants volatiles piégés. Il est prévu un système de vidange avec une canne d'aspiration notée **84.** Ce genre d'opération est connu en soi et donc non décrite en détail.

Sur la figure 6, on a représenté une opération d'extraction par levage du diffuseur **5.** Il est prévu un système de levage du diffuseur **5.** A cet effet, le diffuseur comprend un élément d'accrochage central **58.**

De plus, il est prévu un système de levage vertical **57,59** pour lever le diffuseur.

L'embouchure de la cuve qui présente un diamètre **D1** plus large que le diamètre **D5** du diffuseur ce qui permet de retirer complètement le diffuseur de la cuve. Ainsi, le diffuseur **5** est une pièce qui peut être remplacée entre deux cycles de production.

On remarque la hiérarchie des diamètres : D5 < D4 < D3 ≤ D1.

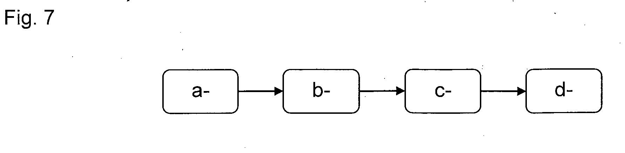

La Figure 7 illustre les étapes **a, b, c, d** du procédé tel qu'on peut exprimer la présente invention :

**a** fournir la cuve de piégeage **3,** configurée pour héberger des sels fondus de piégeage **8,** avec un diffuseur **5** séparant le volume intérieur en un compartiment inférieur **3A** et un compartiment supérieur **3B,** avec le système de recirculation **4** susmentionné,

**b-** introduire les gaz à traiter refroidis **F3** dans le compartiment supérieur principal **3B** au dessus du diffuseur **5,** par les cannes de bullage **69,**

**c-** introduire les gaz recirculés **F5** par le système de recirculation dans le compartiment inférieur **3A,** et les diffuser au travers du diffuseur dans les sels fondus de piégeage **8.**

L'étape **d-** consiste à prélever une portion du flux de recirculation pour former un flux de sortie **F6** dérivé du système de recirculation **4.**

Le taux de recirculation peut être piloté par le régime de la pompe **6** et le contrôle des vannes **49** et **9.** La fraction représentant le flux de sortie est comprise entre 5% et 15% du flux de recirculation. On peut avoir pour cible que de préférence la portion du flux de sortie **F6** soit voisine de 10% du flux de recirculation **F5.**

Concernant les sels de piégeage 8, selon un exemple de réalisation, ils sont à base de **NaOH** et **KOH** (sels hydroxyde), par exemple un mélange des deux à proportions sensiblement égales.

On comprend que la composition des sels hydroxydes est modifiée au fur et à mesure par le piégeage des composants volatils à capturer et peut influer sur la température de fusion du mélange.

Par exemple les sels de piégeage hydroxyde peuvent contenir un mélange molaire 51% de NaOH et 49% de KOH. Ce mélange présente une température de fusion de 172°C. On travaille généralement avec une marge de quelques dizaines de degrés par rapport à la température de fusion, et par conséquent la gamme des températures impliquées dans l'application proposée pour les sels de piégeage hydroxyde est de préférence entre 200°C et 250°C, sachant que

Selon une configuration alternative, les sels de piégeage sont à base de **Li₂CO₃** et/ou **Na₂CO₃** et/ou **K₂CO₃** (sels carbonate).

Par exemple on peur choisir une composition comme suit, en mélange molaire : **Li₂CO₃** à 43,5% ; **Na₂CO₃** à 31,5% et **K₂CO₃** à 25%. La température de fusion de cette composition est de 397 °C.

Dans ce cas de figure, la température moyenne de maintien de la cuve de piégeage est choisie entre 450°C et 550°C.

## Revendications

1. Dispositif (90) pour purifier des gaz à traiter issus d'un coeur de réacteur nucléaire (1) utilisant comme combustible un fluide primaire liquide de type à sels fondus, le dispositif comprenant :
- une cuve de refroidissement (2), pour refroidir les gaz à traiter, et recevant les gaz à traiter (F2) en provenance du coeur de réacteur,
- une cuve de piégeage (3), configurée pour piéger, dans des sels fondus de piégeage (8), des composés chimiques à capturer, la cuve de piégeage délimitant un volume intérieur (V3), la cuve de piégeage recevant les gaz à traiter refroidis (F3) en provenance de la cuve de refroidissement,
la cuve de piégeage comprenant un diffuseur (5) séparant le volume intérieur en deux compartiments, avec un compartiment inférieur (3A) ne contenant pas de sel fondu en quantité substantielle, et un compartiment supérieur principal (3B) contenant les sels fondus,
la cuve de piégeage (3) étant équipée d'un système de recirculation (4) des gaz en cours de purification, les gaz recirculés étant introduits dans le compartiment inférieur, et diffusés au travers du diffuseur dans les sels fondus de piégeage, les gaz à traiter refroidis (F3) en provenance de la cuve de refroidissement étant introduits dans le compartiment supérieur principal au dessus du diffuseur (5).

2. Dispositif selon la revendication 1, dans lequel les gaz à traiter comportent une base d'hélium.

3. Dispositif selon l'une des revendications 1 à 2, dans lequel le diffuseur comprend des passages traversants (56), la section des passages traversants étant comprise entre 0,1 micromètre² et 100 micromètre².

4. Dispositif selon l'une des revendications 1 à 3, dans lequel les sels de piégeage sont à base de sels hydroxyde, e.g. **NaOH** et/ou **KOH.**

5. Dispositif selon l'une des revendications 1 à 3, dans lequel les sels de piégeage sont à base de sels carbonate, e.g. **Li₂CO₃** et/ou **Na₂CO₃** et/ou **K₂CO₃.**

6. Dispositif selon l'une des revendications 1 à 5, dans lequel il est prévu un système de maintien en température de la cuve de piégeage.

7. Dispositif selon l'une des revendications 1 à 8, dans lequel la cuve de piégeage (3) est généralement de révolution autour d'un axe (X3) et présente un diamètre intérieur **D3** pris à mi-hauteur, le diffuseur (5) étant formé comme un disque de diamètre extérieur **D5,** et **D5** étant compris entre 85 % et 96 % de **D3.**

8. Dispositif selon l'une des revendications 1 à 7, dans lequel la cuve de piégeage comprend un corps de cuve (31) et un couvercle (32), le corps de cuve présentant une embouchure ouverte vers le haut avec un diamètre d'embouchure **D1** supérieur au diamètre extérieur **D5** du diffuseur.

9. Dispositif selon l'une des revendications 1 à 8, dans lequel le diffuseur comprend un élément d'accrochage central (58), et dans lequel il est prévu un système de levage vertical (57,59) pour lever le diffuseur (5) et le retirer de la cuve.

10. Dispositif selon l'une des revendications 1 à 9, dans lequel le compartiment supérieur principal contient les sels fondus (8) avec un taux de remplissage compris entre 60% et 85% du volume intérieur (V3).

11. Dispositif selon l'une des revendications 1 à 10, dans lequel les gaz à traiter refroidis (F3) en provenance de la cuve de refroidissement sont introduits dans le compartiment supérieur principal, au dessus du diffuseur (5) via une pluralité d'orifices (68) formés sur une ou plusieurs cannes de bullage (69).

12. **Procédé** pour purifier des gaz à purifier issus d'un coeur de réacteur nucléaire utilisant comme combustible un fluide primaire liquide de type sels fondus, le procédé comprenant :
**a**- fournir une cuve de piégeage (3), configurée pour piéger, dans des sels fondus de piégeage (8), des composés chimiques à capturer présents dans le gaz à purifier, la cuve de piégeage délimitant un volume intérieur (V3), la cuve de piégeage comprenant un diffuseur (5) séparant le volume intérieur en deux compartiments, avec un compartiment inférieur (3A) ne contenant pas de sel fondu en quantité substantielle, et un compartiment supérieur principal (3B) contenant les sels fondus, la cuve de piégeage (3) étant équipée d'un système de recirculation (4) des gaz en cours de purification,
**b-** introduire les gaz à traiter refroidis (F3) dans le compartiment supérieur principal au dessus du diffuseur,
**c-** introduire les gaz recirculés (F5) par le système de recirculation dans le compartiment inférieur (3A), et les diffuser au travers du diffuseur dans les sels fondus de piégeage.

13. **Procédé** selon la revendication 12, dans lequel on prélève une portion du flux de recirculation pour former un flux de sortie (F6) dérivé du système de recirculation.

14. **Procédé** selon l'une des revendications 12 à 13, dans lequel la fraction représentant le flux de sortie est comprise entre 5% et 15% du flux de recirculation (F5), de préférence la portion du flux de sortie (F6) est voisine de 10% du flux de recirculation (F5).

15. **Réacteur nucléaire** utilisant comme combustible un fluide primaire liquide de type sels fondus et comprenant au moins un dispositif selon l'une des revendications 1 à 11 et/ou mettant en oeuvre un procédé selon l'une des revendications 12 à 14.
